# EUROPEAN PATENT SPECIFICATION

(11) **EP 4 501 782 B1**
(45) Date of publication and mention of the grant of the patent: **02.09.2026**
(21) Application number: 24185839.8
(22) Date of filing: 01.07.2024
(51) Int. Cl.: B64D 11/00, B64D 37/08, B64D 9/00

(54) **BARRIER SYSTEMS, VEHICLES AND METHODS FOR A VEHICLE**
SPERRSYSTEME, FAHRZEUGE UND VERFAHREN FÜR EIN FAHRZEUG
SYSTÈMES DE BARRIÈRE, VÉHICULES ET PROCÉDÉS POUR UN VÉHICULE

(30) Priority: 03.08.2023 US 202363517406 P; 29.03.2024 US 202418621398
(43) Date of publication of application: 05.02.2025
(73) Proprietor: The Boeing Company, Arlington, VA 22202 (US)
(72) Inventor: DIAZ, Derek Tyler, ARLINGTON, 22202 (US); YADON, Samuel Howard, ARLINGTON, 22202 (US); MONARY, Andrew Peter, ARLINGTON, 22202 (US); CROWE, Kevin Clayton, ARLINGTON, 22202 (US); ROTVOLD, Colin, ARLINGTON, 22202 (US); MALKINSON, Patrick, ARLINGTON, 22202 (US); FRAKER, Randall, ARLINGTON, 22202 (US)
(74) Representative: Plasseraud IP

(56) References cited:
- EP-A1- 4 197 903
- EP-B1- 3 365 229
- WO-A1-2022/046107
- US-A1- 2013 240 163
- US-A1- 2022 119 089
- US-B2- 8 869 865
- ALAMY: "Cheerful flight attendants fixing curtains in airplane", 4 October 2021 (2021-10-04), XP093390832, Retrieved from the Internet <URL:https://www.alamy.com/cheerful-flight-attendants-fixing-curtains-in-airplane-image465597049.html>

## Description

### FIELD OF THE DISCLOSURE

Examples of the present disclosure generally relate to barrier systems and methods for a cargo compartment of an aircraft.

### BACKGROUND OF THE DISCLOSURE

Vehicles such as commercial aircraft are used to transport passengers and/or cargo between various locations. A typical aircraft includes an internal cabin having seats for passengers. As another example, a freighter aircraft includes a main deck compartment. That is, a freighter aircraft can include an internal cabin dedicated to transporting cargo instead of passengers.

A barrier can be used to separate a main deck cargo compartment from one or more areas, such as a passenger seating area. Known barriers are either permanent structures, or require a relatively long duration to remove and install. Barriers are typically configured to prevent passage of smoke therethrough. As such, a typical barrier provides a wall-to-wall, ceiling-to-floor sealed interface.

Document EP4197903A1 discloses an example of thermal barrier curtain system. Thermal barrier curtain systems include a thermal barrier curtain and port and starboard anchor/hoist strap assemblies. The thermal barrier curtain includes forward and aft flexible air-impervious panels which are sealed about peripheral edges thereof so as to define a central thermal barrier region and separator elements positioned between and attached to the forward and aft panels within the central thermal barrier region so as to define a dead air space therebetween. Each of the port and starboard anchor/hoist strap assemblies includes an elongate strap, upper and lower attachment members positioned at opposed upper and lower ends of the elongate strap, an upper attachment loop adapted to receive and be attached to a respective connection element of the thermal barrier curtain, and an intermediate retaining loop which is adapted to receive and be attached to the lower attachment member of the anchor/hoist assembly.

Document US2022119089A1 discloses an example of aircraft compartmental barrier. A fabric barrier for an aircraft compartmental barrier includes a fabric barrier portion and a flexible crosspiece, wherein at least part of one edge of the fabric barrier portion terminates at the flexible crosspiece, wherein the flexible crosspiece is adapted to fit into and be retained within a partially covered groove, wherein the partially covered groove includes a pair of opposing flange portions covering a groove whereby a central longitudinal portion of the groove remains uncovered, wherein the flexible crosspiece is adapted to be released from the partially covered groove by passing between the pair of opposing flange portions during a decompression event. A decompression system for an aircraft compartmental barrier includes said fabric barrier, and a method for isolating two internal volumes within an aircraft using said decompression system.

Document WO2022046107A1 provides examples of seat partitioning systems. A first divider partition is arranged along a longitudinal axis of a passenger aircraft. A second divider partition is arranged along a lateral axis of the aircraft. The passenger partition systems may be used to partition off two or more seats within the passenger aircraft (e.g., to quarantine sick passengers). Further, in its wording, EP3365229B1 discloses movable class dividers for use in passenger cabins with pivoting luggage bins.

### SUMMARY OF THE DISCLOSURE

A need exists for a barrier for an internal cabin of an aircraft that can be quickly and efficiently moved between a closed position and an open position.

With that need in mind, certain examples of the present disclosure provide a vehicle (such as an aircraft) including an internal cabin having a main deck cargo compartment, and a barrier system within the internal cabin. The barrier system includes one or more flexible drapes moveable between an open position and a closed position. Barrier systems, vehicles and methods for vehicles are provided in the appended claims.

In at least one example, the flexible drapes are configured to be selectively moved between the open position and the closed position to selectively open and close the main deck cargo compartment from one more other areas of the internal cabin. As another example, the flexible drapes are configured to be selectively moved between the open position and the closed position to selectively open and close the main deck cargo compartment into separate areas.

The one or more flexible drapes comprise two or more flexible drapes. The barrier system also includes an openable interface configured to selectively couple and uncouple the two or more flexible drapes.

The one or more flexible drapes include one or more ropes configured to secure the one or more drapes in the open position.

The one or more flexible drapes can include a weighted roller bar at a bottom end.

The one or more flexible drapes can include one or more coupling interfaces at a bottom end. The one or more coupling interfaces are configured to removably couple to one or more reciprocal interfaces on a floor of the internal cabin.

The one or more flexible drapes can include a recessed opening configured to fit over a cargo handling track system when the one or more flexible drapes are in the closed position.

Certain examples of the present disclosure provide a method including moving the flexible drapes between the open position and the closed position. In at least one example, said moving includes selectively opening and closing the main deck cargo compartment in relation to one more other areas of the internal cabin. In at least one example, said moving includes selectively opening and closing the main deck cargo compartment in relation to separate areas.

### BRIEF DESCRIPTION OF THE DRAWINGS

Figure 1 illustrates a perspective front view of an aircraft, according to an example of the present disclosure.
Figure 2 illustrates a front perspective view of a barrier system having flexible drapes in a closed position within an internal cabin, according to an example of the present disclosure.
Figure 3 illustrate a front perspective view of a barrier system having the flexible drapes in an open position within the internal cabin, according to an example of the present disclosure.
Figure 4 illustrates a front perspective view of a barrier system having a drape moved toward an open position, according to an example of the present disclosure.
Figure 5 illustrates a front perspective view of a barrier system having the drape in the open position, according to an example of the present disclosure.
Figure 6 illustrates a front perspective view of a barrier system with the drape being secured in the open position, according to an example of the present disclosure.
Figure 7 illustrates a front perspective view of a barrier system with the drape firmly secured in the open position, according to an example of the present disclosure.
Figure 8 illustrates a front perspective view of a barrier system with a drape being moved toward an open position, according to an example of the present disclosure.
Figure 9 illustrates a front perspective view of a barrier system with the drape between a fully open position and a fully closed position, according to an example of the present disclosure.
Figure 10 illustrates a front perspective view of a barrier system having drapes in a closed position, according to an example of the present disclosure.
Figure 11 illustrates a cross-sectional view of a cross-sectional view of a drape through line 11-11 of Figure 10.
Figure 12 illustrates a close-up view of the barrier system within section 12 of Figure 10.
Figure 13 illustrates a top plan view of a main deck cargo compartment of an aircraft, according to an example of the present disclosure.

### DETAILED DESCRIPTION OF THE DISCLOSURE

The foregoing summary, as well as the following detailed description of certain embodiments will be better understood when read in conjunction with the appended drawings. As used herein, an element or step recited in the singular and preceded by the word "a" or "an" should be understood as not necessarily excluding the plural of the elements or steps. Further, references to "one embodiment" are not intended to be interpreted as excluding the existence of additional embodiments that also incorporate the recited features. Moreover, unless explicitly stated to the contrary, embodiments "comprising" or "having" an element or a plurality of elements having a particular condition can include additional elements not having that condition.

As described herein, examples of the present disclosure provide a vehicle including an internal cabin having a main deck cargo compartment, and a barrier system within the internal cabin. The barrier system is configured to selectively open and close the main deck cargo compartment from one more other areas of the internal cabin, and/or selectively open and close the main deck cargo compartment into separate areas.

In at least one example, the barrier system includes two or more flexible drapes configured to be selectively moved between a deployed position and a stowed position. An openable interface is configured to selectively couple and uncouple the two or more flexible drapes.

The two or more drapes include one or more ropes configured to secure the one or more drapes in the stowed position. The two or more drapes can include a weighted roller bar at a bottom end.

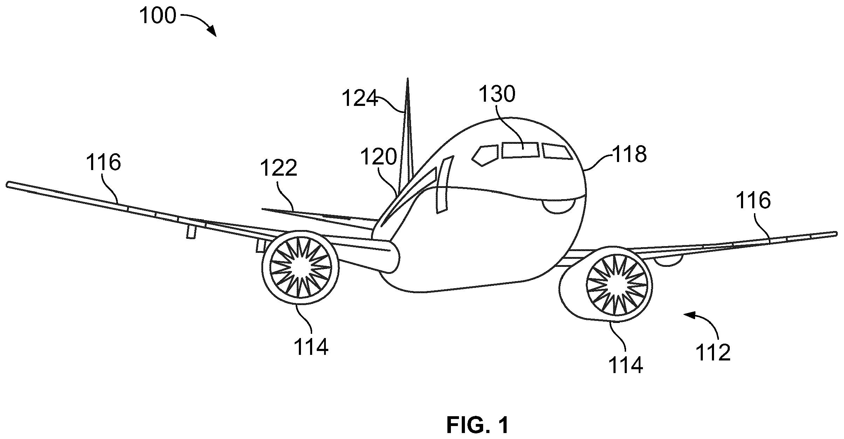

Figure 1 illustrates a perspective front view of an aircraft 100, according to an example of the present disclosure. The aircraft 100 includes a propulsion system 112 that includes engines 114, for example. Optionally, the propulsion system 112 may include more engines 114 than shown. The engines 114 are carried by wings 116 of the aircraft 100. In other examples, the engines 114 may be carried by a fuselage 118 and/or an empennage 120. The empennage 120 may also support horizontal stabilizers 122 and a vertical stabilizer 124.

The fuselage 118 of the aircraft 100 defines an internal cabin 130. The internal cabin 130 includes a cargo compartment. For example, the cargo compartment can be a main deck cargo compartment. The internal cabin 130 can also include a passenger seating area. A barrier system is used to separate the cargo compartment from the passenger seating area. Optionally, the internal cabin may not include a passenger seating area, and a barrier system can be used to separate different areas of the cargo compartment. As another example, the cargo compartment can be outside of the internal cabin (such as underneath a floor), and a barrier system can be used to separate different areas of the cargo compartment.

Alternatively, instead of an aircraft, examples of the present disclosure may be used with various other vehicles, such as automobiles, buses, locomotives and train cars, watercraft, and the like.

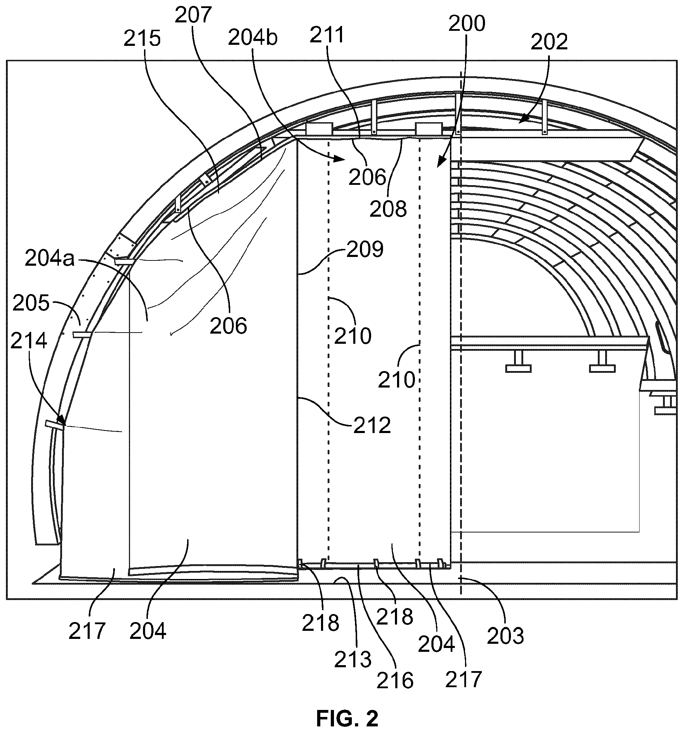

Figure 2 illustrates a front perspective view of a barrier system 200 having flexible drapes 204 in a closed position within an internal cabin 202, according to an example of the present disclosure. Figure 2 shows half of the barrier system 200. It is to be understood that the barrier system 200 can span across an entire width of the internal cabin 202.

As used herein, the term "outboard" means a position that is further away from a central longitudinal plane 203 of the internal cabin 202 as compared to another component. The term "inboard" means a position that is closer to the central longitudinal plane 203 of the internal cabin 202 as compared to another component.

The barrier system 200 includes two or more flexible drapes 204. The drapes 204 can be formed of a flexible plastic, for example. In at least one example, the drapes 204 can include a fire-retardant material. In at least one example, the drapes 204 can include an intumescent material. The drapes 204 can be opaque. In at least one other example, the drapes 204 can be translucent. As another example, the drapes 204 can include both opaque portions and translucent portions.

The drapes 204 are configured to be moved between a deployed position coinciding with the closed position, and a stowed position coinciding with an open position. The drapes 204 includes upper ends 206 that are secured to fixed structures within the internal cabin 202. For example, the upper ends 206 are secured to sidewalls and/or a ceiling through couplings, such as fasteners, brackets, rails, and/or the like. The drapes 204 include ropes 210 that can be used to retain the drapes 204 in rolled-up, open positions. An openable interface 212 can couple adjacent drapes 204 together. For example, the interface 212 can include a zipper. Each section can include a zipper member, together which provide the openable interface 212. The interface 212 is configured to selectively couple and uncouple the drapes 204a and 204b from one another. An outboard section 214 of a drape 204 can provide space for passage along sidewalls while the barrier system 200 is in the closed position.

As shown, the drapes 204 can include a first drape 204a (such as an outboard drape) and a second drape 204b (such as an inboard drape). The first drape 204a can be sized and shaped to conform to interior surfaces of the outboard sidewall 205 and outboard ceiling portion 207. The second drape 204b can be sized and shaped to conform to an inboard edge 209 of the first drape 204a, and an inboard ceiling portion 211. The first drape 204a and the second drape 204b extend across half an axial cross-section of the internal cabin 202, between the outboard sidewall 205 and the central longitudinal plane 203. Accordingly, four drapes 204 can extend across an entire axial cross-section of the internal cabin 202. In at least one other example, a single drape 204 can extend across half an axial cross-section of the internal cabin 202 (such that two drapes 204 extend across the entire cross-section of the internal cabin 202. In at least one other example, a single drape 204 can extend across an entire axial cross-section of the internal cabin 202. As another example, three drapes 204 can extend across the entire axial cross-section of the internal cabin 202.

In the closed position, the drapes 204 are unrolled to provide substantially flat barrier sheets. In the closed position, the drapes 204 extend from and between a floor 213 and a ceiling 215. The drapes 204 in the closed position may not fully contact the floor 213 or the ceiling 215 in the closed position. Optionally, the drapes 204 in the closed position may directly contact both the floor 213 and the ceiling 215.

In at least one example, a weighted roller bar 216 is disposed at a bottom end 217 of the drape(s) 204. The roller bar 216 is configured to allow the drape(s) 204 to be upwardly rolled into the open position.

Further, one or more coupling interfaces 218 can be disposed at the bottom end 217 of the drape(s) 204. The coupling interfaces 218 are configured to removably couple to reciprocal interfaces on a floor. For example, the coupling interfaces 218 can be or include hook and loop fasteners. As another example, the coupling interfaces 218 can include latches, snaps, and/or the like. Optionally, the drape(s) 204 may not include a coupling interface at a bottom end.

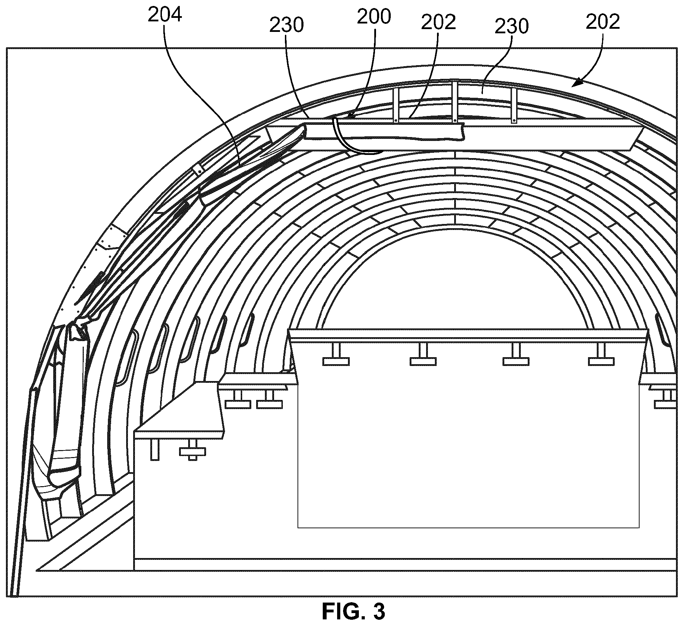

Figure 3 illustrate a front perspective view of the barrier system 200 having the flexible drapes 204 in an open position within the internal cabin 202. Couplers 230, such as hooks, rings, or the like, can be used to securely suspend the drape(s) 204 in the open position. Ropes can be secured by cleat(s). A lanyard and snap can be used to secure the barrier system 200 in the open position.

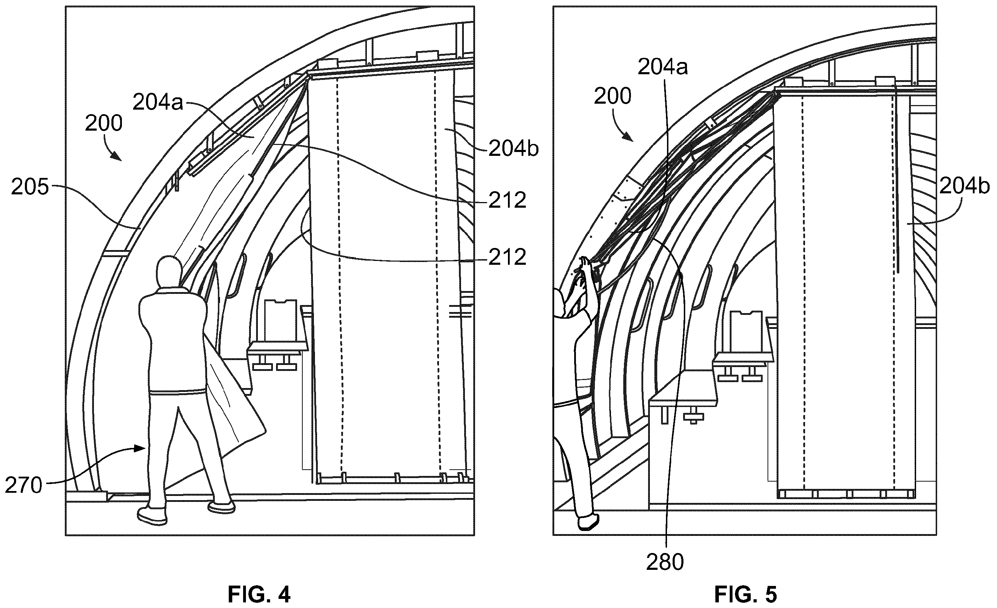

Figure 4 illustrates a front perspective view of the barrier system 200 having a drape 204a moved toward an open position, according to an example of the present disclosure. In order to move the drape 204a into the open position, an individual 270 first disengages the interface 212 between the drape 204a and the drape 204b. For example, the interface 212 can be a zipper. As such, the individual 270 unzippers the drape 204a from the drape 204b. After the drape 204a is uncoupled from the drape 204b, the individual 270 manually pulls the drape 204a toward the outboard sidewall 205.

Figure 5 illustrates a front perspective view of the barrier system 200 having the drape secured in the open position. After the drape 204a is pulled on or proximate to the outboard sidewall 205, securing members 280, such as one or more lanyards, can be used to suspend the drape 204a in the open position. Other examples of securing members 280 include buttons, hooks, hook and loop fasteners, or the like.

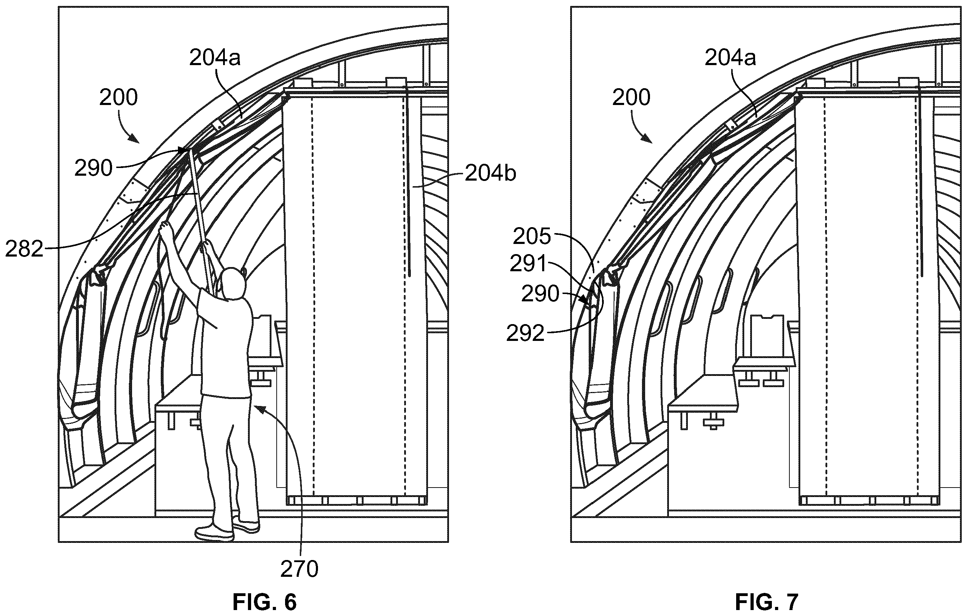

Figure 6 illustrates a front perspective view of the barrier system 200 with the drape 204a being secured in the open position. The individual 270 can use a tool 282, such as a rod, stick, or the like having an engagement portion (such as a hook) to attach rope 290 to hook the drape 204a on a slope section of the ceiling.

Figure 7 illustrates a front perspective of the barrier system 200 with the drape 204a firmly secured in the open position. The rope 290 can then be pulled to tighten the drape 204a against the ceiling. An end 292 of the rope 290 can then be tied to a cleat 291 on the sidewall 205 to maintain the drape 204a in the open position.

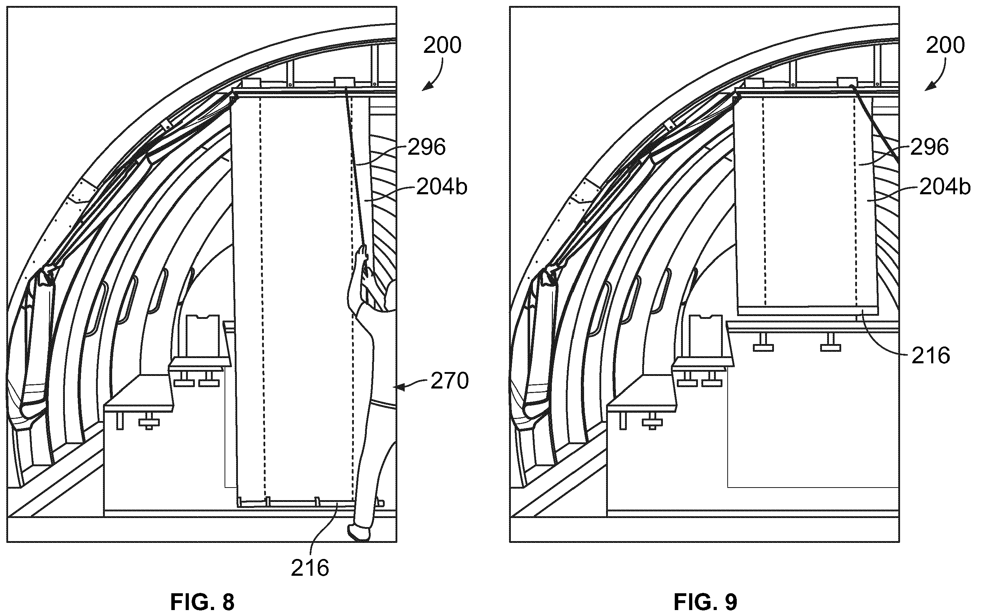

Figure 8 illustrates a front perspective view of the barrier system 200 with the drape 204b being moved toward an open position. Figure 9 illustrates a front perspective view of the barrier system 200 with the drape 204b between a fully open position and a fully closed position. As shown in Figure 8 and 9, the individual pulls on a rope 296 coupled to the drape 204b to upwardly move the drape 204b toward the ceiling. As the drape 204b moves upwardly, the drape 204b can roll around the roller bar 216.

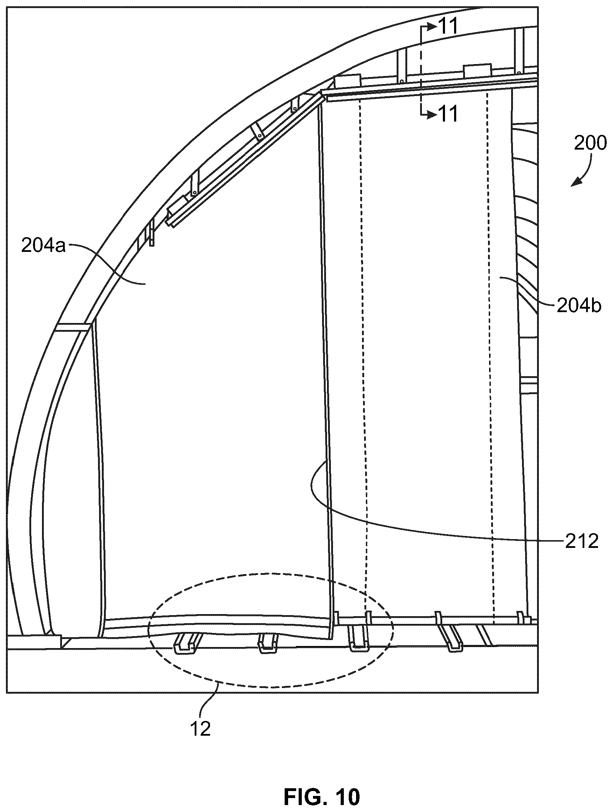

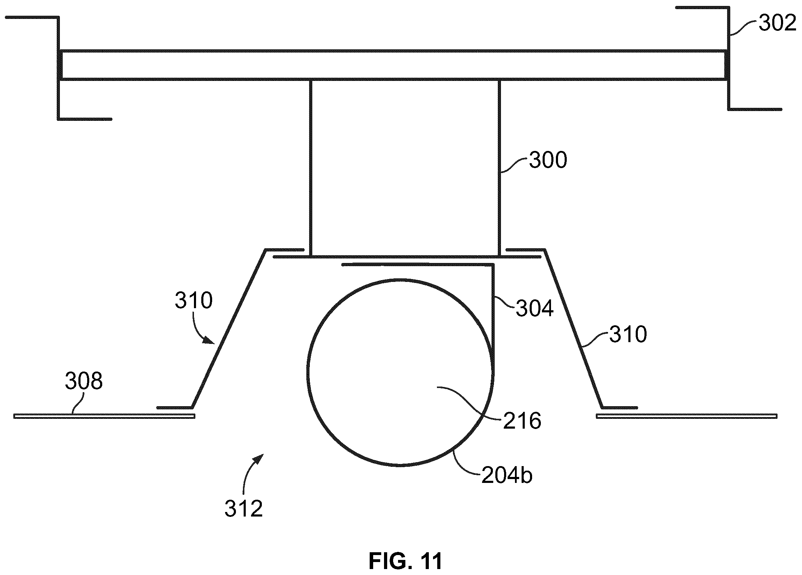

Figure 10 illustrates a front perspective view of the barrier system 200 having drapes 204a and 204b in a closed position, according to an example of the present disclosure. Figure 11 illustrates a cross-sectional view of a cross-sectional view of a drape 204b through line 11-11 of Figure 10. Referring to Figures 10 and 11, the drape 204b in Figure 11 is shown in a rolled-up, open position. The drape 204b is rolled around the roller bar 216. The drape 204b can be secured to a beam 300 extending downwardly from an upper frame 302 by a securing bracket 304. The securing bracket 304 is recessed above a ceiling 308 by closeouts 310. In this manner, the securing bracket 304 suspends the drape 204b in the closed position within a channel 312 formed in the ceiling 308.

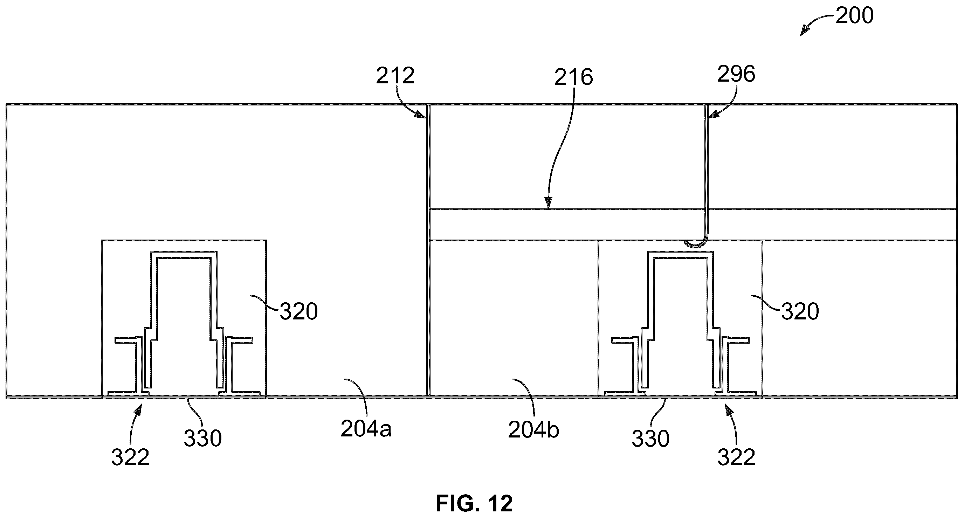

Figure 12 illustrates a close-up view of the barrier system 200 within section 12 of Figure 10. As shown, each drape 204a and 204b can include a recessed opening 320, which fits over a cargo handling track system 322 extending above a floor 330 of a cargo compartment. In this manner, the cargo handling track system 322 does not prop up the drapes 204a and 204b in the closed position.

As shown, the rope 296 is coupled to the roller bar 216. As such, when the rope 296 is pulled, the roller bar 216 rolls upwardly, and the drape 204b rolls around the roller bar 216.

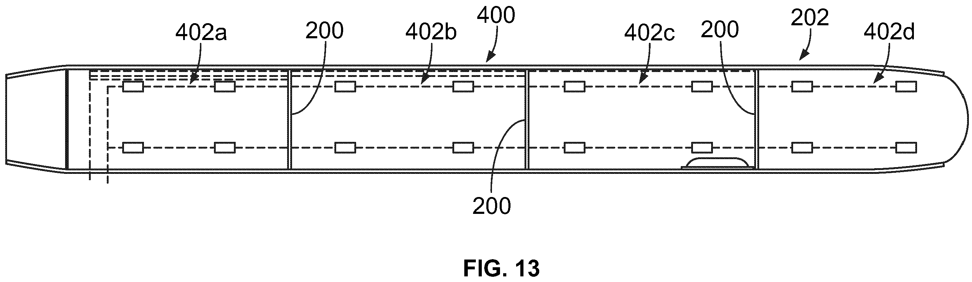

Figure 13 illustrates a top plan view of a main deck cargo compartment 400 of an aircraft, according to an example of the present disclosure. Barrier systems 200 are disposed within the main deck cargo compartment 400. Fewer or more barrier systems 200 than shown can be used.

Referring to Figures 1-13, cargo compartment airflow shutdown and aircraft depressurization is a known method of suppressing a cargo fire within a main deck of a transport category freighter-only aircraft. Implementation of a cargo fire suppression system in the main deck cargo compartment similar to an existing gaseous suppression system available in the lower cargo compartments improves protection against main deck cargo fires. However, use of a gaseous fire suppression system in the main deck cargo compartment can be impractical due to the large quantity of suppression agent that would be required as a result of the large volume and air exchange rate of the compartment.

Accordingly, the barrier systems 200 are used to segment the volume of the main deck cargo compartment 400 into separate smaller areas 402a, 402b, 402c, and 402d, thereby greatly reducing the quantity of suppression agent required, and allow for installation of a targeted main deck cargo fire suppression system using a gaseous agent. The barrier systems 200 segment the main deck cargo compartment 400 into a series of smaller areas 402a-d for the purpose of installing a gaseous main deck cargo fire suppression system. As shown and described, the barrier systems 200 can be selectively stowed and deployed quickly so as to not impact cargo loading/unloading operations, and fit between cargo pallet positions.

In at least one example, the drape(s) 204 of the barrier system 200 can be formed of a fabric material that meets the requirements of 14 CFR Part 25, Appendix F, Part III. A passageway between the cargo compartment sidewall and an outboard cargo loading boundary allows personnel to pass through the barrier system 200 in the deployed, closed position. A semi-permanent installation along the ceiling and sidewalls can reduce leakage through the barrier system 200. A zipper or similar interface can be used where a horizontal ceiling segment meets a sloped ceiling segment. A lanyard and snap (or similar) interface on sidewall can be used to secure outboard barrier section to sidewall (when the outboard barrier section is in the open position). A rope and hook (or similar) can be used to conform an outboard barrier section to a cargo compartment inner mold line. The rope and hook (or similar) system can also be used to raise/lower rolling center section of barrier. A cleat (or similar) can be used to secure ropes to a sidewall.

An electro-mechanical interface between the barrier system 200 and another area can be used to indicate that the barrier system 200 is fully deployed into the closed position (for example, a connector attached to zipper that plugs into port on the floor). When deployed into the closed position, the barrier system 200 can drape loosely on a floor/cargo handling system, and/or be removably secured to the floor by coupling interfaces. The barrier system 200 is configured for quick deployment into the closed position, and stowage into the open position. The barrier system 200 helps achieve the ultimate goal of protecting a main deck cargo compartment with a gaseous cargo fire suppression system similar to what is currently used in lower cargo compartments.

Optionally, the barrier system 200 can be or otherwise include one or more drapes that divide at butt-line zero (via zipper or similar), and pull to either side of the compartment. In this example, there may be no need for a roll-up configuration.

As described herein, examples of the present disclosure provide a barrier system for an internal cabin of an aircraft that can be quickly and efficiently moved between a closed position and an open position.

While various spatial and directional terms, such as top, bottom, lower, mid, lateral, horizontal, vertical, front and the like can be used to describe embodiments of the present disclosure, it is understood that such terms are merely used with respect to the orientations shown in the drawings. The orientations can be inverted, rotated, or otherwise changed, such that an upper portion is a lower portion, and vice versa, horizontal becomes vertical, and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described embodiments (and/or aspects thereof) can be used in combination with each other. In addition, many modifications can be made to adapt a particular situation or material to the teachings of the various embodiments of the disclosure without departing from their scope. While the dimensions and types of materials described herein are intended to define the parameters of the various embodiments of the disclosure, the embodiments are by no means limiting and are exemplary embodiments. Many other embodiments will be apparent to those of skill in the art upon reviewing the above description. The scope of the various embodiments of the disclosure should, therefore, be determined with reference to the appended claims.

In the appended claims and the detailed description herein, the terms "including" and "in which" are used as the plain-English equivalents of the respective terms "comprising" and "wherein." Moreover, the terms "first," "second," and "third," etc. are used merely as labels, and are not intended to impose numerical requirements on their objects.

This written description uses examples to disclose the various embodiments of the disclosure, including the best mode, and also to enable any person skilled in the art to practice the various embodiments of the disclosure, including making and using any devices or systems and performing any incorporated methods. The patentable scope of the various embodiments of the disclosure is defined by the claims, and can include other examples that occur to those skilled in the art. Such other examples are intended to be within the scope of the claims if the examples have structural elements that do not differ from the literal language of the claims.

## Claims

1. A barrier system (200) configured for an internal cabin (130, 202) of a vehicle, wherein the internal cabin (130, 202) has a main cargo deck compartment, the barrier system (200) comprising:
two or more flexible drapes (204) moveable between an open position and a closed position;
an openable interface (212) configured to selectively couple and uncouple the two or more flexible drapes (204); and
one or more ropes (210, 290) configured to secure one or more of the two or more flexible drapes (204) in the open position;
**characterised in that** the barrier system further comprises:
a weighted roller bar (216) at a bottom end of one or more of the two or more flexible drapes (204); and/or
one or more coupling interfaces (218) at a bottom end of one or more of the two or more flexible drapes (204), wherein the one or more coupling interfaces (218) are configured to removably couple to one or more reciprocal interfaces on a floor (213) of the internal cabin (130, 202).

2. A vehicle, preferably an aircraft, comprising:
an internal cabin (130, 202) having a main deck cargo compartment (400); and
a barrier system (200) according to claim 1.

3. The vehicle of claim 2, wherein the flexible drapes (204) are configured to be selectively moved between the open position and the closed position to selectively open and close the main deck cargo compartment (400) into separate areas.

4. The vehicle of any one claim 2 and 3, wherein the flexible drapes (204) are configured to be selectively moved between the open position and the closed position to selectively open and close the main deck cargo compartment (400) from one more other areas of the internal cabin (130, 202).

5. The vehicle of any one of claims 2 to 4, wherein the two or more flexible drapes (204) comprise one or more additional coupling interfaces (218) at a bottom end, wherein the one or more additional coupling interfaces (218) are configured to removably couple to one or more reciprocal interfaces on a door (213) of the internal cabin (130, 202).

6. The vehicle of any one of claims 2 to 5, wherein the two or more flexible drapes (204) comprise a recessed opening (320) configured to fit over a cargo handling track system (322) when the two or more flexible drapes (204) are in the closed position.

7. A method for a vehicle comprising:
an internal cabin (130, 202) having a main deck cargo compartment (400); and
a barrier system (200) according to claim 1,
wherein the method comprises:
moving the flexible drapes (204) between the open position and the closed position.

8. The method of claim 7, wherein said moving comprises selectively opening and closing the main deck cargo compartment (400) in relation to one more other areas of the internal cabin (130, 202).

9. The method of claim 7 or 8, wherein said moving comprises selectively opening and closing the main deck cargo compartment (400) in relation to separate areas.

10. The method of any one of claims 7 to 9, further comprising engaging the openable interface (212) to selectively couple and uncouple the two or more flexible drapes (204).

11. The method of any one of claims 7 to 10, further comprising engaging the one or more ropes (210, 290) configured to secure the two or more flexible drapes (204) in the open position.

12. The method of any one of claims 7 to 11, further comprising rolling the two or more flexible drapes (204) around the weighted roller bar (216) to move the two or more flexible drapes (204) into the closed position.

13. The method of any one of claims 7 to 12, further comprising removably coupling the one or more coupling interfaces (218) of the two or more flexible drapes (204) to one or more reciprocal interfaces on a floor (213) of the internal cabin (130, 202).

14. The method of any one of claims 7 to 13, further comprising fitting a recessed opening of the two or more flexible drapes (204) over a cargo handling track system (322) when the two or more drapes are in the closed position.

## Patentansprüche

1. Barrieresystem (200), welches für eine interne Kabine (130, 202) eines Fahrzeugs eingerichtet ist, wobei die interne Kabine (130, 202) ein Haupt-Frachtdeckabteil aufweist, wobei das Barrieresystem (200) umfasst:
zwei oder mehr flexible Vorhänge (204), welche zwischen einer offenen Position und einer geschlossenen Position bewegbar sind;
eine öffenbare Schnittstelle (212), welche dazu eingerichtet ist, die zwei oder mehr flexiblen Vorhänge (204) selektiv zu koppeln und zu entkoppeln; und
ein oder mehrere Seile (210, 290), welche dazu eingerichtet sind, einen oder mehrere der zwei oder mehr flexiblen Vorhänge (204) in der offenen Position zu sichern;
**dadurch gekennzeichnet, dass** das Barrieresystem ferner umfasst:
eine Gewicht-Rollenstange (216) an einem unteren Ende von einem oder mehreren der zwei oder mehr flexiblen Vorhänge (204); und/oder
eine oder mehrere Kopplungsschnittstellen (218) an einem unteren Ende von einem oder mehreren der zwei oder mehr flexiblen Vorhänge (204), wobei die eine oder die mehreren Kopplungsschnittstellen (218) dazu eingerichtet sind, lösbar mit einer oder mehreren entgegengesetzten Schnittstellen an einem Boden (213) der internen Kabine (130, 202) zu koppeln.

2. Fahrzeug, vorzugsweise Flugzeug, umfassend:
eine interne Kabine (130, 202), welche ein Hauptdeck-Frachtabteil (400) aufweist; und
ein Barrieresystem (200) nach Anspruch 1.

3. Fahrzeug nach Anspruch 2, wobei die flexiblen Vorhänge (204) dazu eingerichtet sind, selektiv zwischen der offenen Position und der geschlossenen Position bewegt zu werden, um das Hauptdeck-Frachtabteil (400) in verschiedene Bereiche zu öffnen und zu schließen.

4. Fahrzeug nach einem aus Anspruch 2 und 3, wobei die flexiblen Vorhänge (204) dazu eingerichtet sind, selektiv zwischen der offenen Position und der geschlossenen Position bewegt zu werden, um selektiv das Hauptdeck-Frachtabteil (400) von einem weiteren anderen Bereich der internen Kabine (130, 202) zu öffnen und zu schließen.

5. Fahrzeug nach einem der Ansprüche 2 bis 4, wobei die zwei oder mehr flexiblen Vorhänge (204) eine oder mehrere zusätzliche Kopplungsschnittstellen (218) an einem unteren Ende umfassen, wobei die eine oder mehreren zusätzlichen Kopplungsschnittstellen (218) dazu eingerichtet sind, lösbar mit einer oder mehreren entgegengesetzten Schnittstellen an einer Tür (213) der internen Kabine (130, 202) zu koppeln.

6. Fahrzeug nach einem der Ansprüche 2 bis 5, wobei die zwei oder mehr flexiblen Vorhänge (204) eine vertiefte Öffnung (320) umfassen, welche dazu eingerichtet ist, über ein Frachthandhabung-Bahnsystem (322) zu passen, wenn die zwei oder mehr flexiblen Vorhänge (204) in der geschlossenen Position sind.

7. Verfahren für ein Fahrzeug, umfassend:
eine interne Kabine (130, 202), welche ein Hauptdeck-Frachtabteil (400) aufweist; und
ein Barrieresystem (200) nach Anspruch 1,
wobei das Verfahren umfasst:
Bewegen der flexiblen Vorhänge (204) zwischen der offenen Position und der geschlossenen Position.

8. Verfahren nach Anspruch 7, wobei das Bewegen ein selektives Öffnen und Schließen des Hauptdeck-Frachtabteils (400) bezüglich eines weiteren anderen Bereichs der internen Kabine (130, 202) umfasst.

9. Verfahren nach Anspruch 7 oder 8, wobei das Bewegen ein selektives Öffnen und Schließen des Hauptdeck-Frachtabteils (400) bezüglich separater Bereiche umfasst.

10. Verfahren nach einem der Ansprüche 7 bis 9, ferner umfassend ein Aktivieren der öffenbaren Schnittstelle (212) zum selektiven Koppeln und Entkoppeln der zwei oder mehr flexiblen Vorhänge (204).

11. Verfahren nach einem der Ansprüche 7 bis 10, ferner umfassend ein Aktivieren des einen oder der mehreren Seile (210, 290), welche dazu eingerichtet sind, die zwei oder mehr flexiblen Vorhänge (204) in der offenen Position zu sichern.

12. Verfahren nach einem der Ansprüche 7 bis 11, ferner umfassend ein Rollen der zwei oder mehr flexiblen Vorhänge (204) um die Gewicht-Rollenstange (216), um die zwei oder mehr flexiblen Vorhänge (204) in die geschlossene Position zu bewegen.

13. Verfahren nach einem der Ansprüche 7 bis 12, ferner umfassend ein lösbares Koppeln der einen oder mehreren Kopplungsschnittstellen (218) der zwei oder mehr flexiblen Vorhänge (204) mit einer oder mehreren entgegengesetzten Schnittstellen an einem Boden (213) der internen Kabine (130, 202).

14. Verfahren nach einem der Ansprüche 7 bis 13, ferner umfassend ein Passen einer vertieften Öffnung der zwei oder mehr flexiblen Vorhänge (204) über ein Frachthandhabung-Bahnsystem (322), wenn die zwei oder mehr Vorhänge in der geschlossenen Position sind.

## Revendications

1. Système de barrière (200) configuré pour une cabine interne (130, 202) d'un véhicule, dans lequel la cabine interne (130, 202) a un compartiment de soute principal, le système de barrière (200) comprenant :
deux rideaux souples (204) ou plus pouvant être déplacés entre une position ouverte et une position fermée ;
une interface ouvrable (212) configurée pour coupler et désaccoupler sélectivement les deux rideaux souples (204) ou plus ; et
une ou plusieurs cordes (210, 290) configurées pour fixer un ou plusieurs des deux rideaux souples (204) ou plus dans la position ouverte ;
**caractérisé en ce que** le système de barrière comprend en outre :
une barre ronde lestée (216) à une extrémité inférieure d'un ou plusieurs des deux rideaux souples (204) ou plus ; et/ou
une ou plusieurs interfaces de couplage (218) à une extrémité inférieure d'un ou plusieurs des deux rideaux souples (204) ou plus, dans lequel les une ou plusieurs interfaces de couplage (218) sont configurées pour se coupler de manière amovible à une ou plusieurs interfaces réciproques sur un plancher (213) de la cabine interne (130, 202).

2. Véhicule, de préférence aéronef, comprenant :
une cabine interne (130, 202) ayant un compartiment de soute principal (400) ; et
un système de barrière (200) selon la revendication 1.

3. Véhicule selon la revendication 2, dans lequel les rideaux souples (204) sont configurés pour être déplacés sélectivement entre la position ouverte et la position fermée pour ouvrir et fermer sélectivement le compartiment de soute principal (400) pour former des zones distinctes.

4. Véhicule selon l'une quelconque des revendications 2 et 3, dans lequel les rideaux souples (204) sont configurés pour être déplacés sélectivement entre la position ouverte et la position fermée pour ouvrir et fermer sélectivement le compartiment de soute principal (400) par rapport à une autre zone de la cabine interne (130, 202).

5. Véhicule selon l'une quelconque des revendications 2 à 4, dans lequel les deux rideaux souples (204) ou plus comprennent une ou plusieurs interfaces de couplage supplémentaires (218) à une extrémité inférieure, dans lequel les une ou plusieurs interfaces de couplage supplémentaires (218) sont configurées pour se coupler de manière amovible à une ou plusieurs interfaces réciproques sur une porte (213) de la cabine interne (130, 202).

6. Véhicule selon l'une quelconque des revendications 2 à 5, dans lequel les deux rideaux souples (204) ou plus comprennent une ouverture encastrée (320) configurée pour s'ajuster sur un système de rails de manutention de fret (322) lorsque les deux rideaux souples (204) ou plus sont dans la position fermée.

7. Procédé pour un véhicule comprenant :
une cabine interne (130, 202) ayant un compartiment de soute principal (400) ; et
un système de barrière (200) selon la revendication 1,
dans lequel le procédé comprend :
le déplacement des rideaux souples (204) entre la position ouverte et la position fermée.

8. Procédé selon la revendication 7, dans lequel ledit déplacement comprend l'ouverture et la fermeture sélectives du compartiment de soute principal (400) par rapport à une autre zone de la cabine interne (130, 202).

9. Procédé selon la revendication 7 ou 8, dans lequel ledit déplacement comprend l'ouverture et la fermeture sélectives du compartiment de soute principal (400) par rapport à des zones séparées.

10. Procédé selon l'une quelconque des revendications 7 à 9, comprenant en outre la mis en prise de l'interface ouvrable (212) pour coupler et désaccoupler sélectivement les deux rideaux souples (204) ou plus.

11. Procédé selon l'une quelconque des revendications 7 à 10, comprenant en outre le mise en prise des une ou plusieurs cordes (210, 290) configurées pour fixer les deux rideaux souples (204) ou plus dans la position ouverte.

12. Procédé selon l'une quelconque des revendications 7 à 11, comprenant en outre l'enroulement des deux rideaux souples (204) ou plus autour de la barre ronde lestée (216) pour déplacer les deux rideaux souples (204) ou plus dans la position fermée.

13. Procédé selon l'une quelconque des revendications 7 à 12, comprenant en outre le couplage amovible des une ou plusieurs interfaces de couplage (218) des deux rideaux souples (204) ou plus à une ou plusieurs interfaces réciproques sur un plancher (213) de la cabine interne (130, 202).

14. Procédé selon l'une quelconque des revendications 7 à 13, comprenant en outre l'ajustage d'une ouverture encastrée des deux rideaux souples (204) ou plus sur un système de rails de manutention de fret (322) lorsque les deux rideaux ou plus sont dans la position fermée.
